# EUROPÄISCHE PATENTSCHRIFT

(11) **EP 4 138 052 B1**
(45) Veröffentlichungstag und Bekanntmachung des Hinweises auf die Patenterteilung: **11.10.2023**
(21) Anmeldenummer: 21382770.2
(22) Anmeldetag: 19.08.2021
(51) Int. Cl.: G07C 3/00, G07C 9/00, G05B 19/042

(54) **VERFAHREN ZUR INBETRIEBNAHMEVORBEREITUNG EINES STEUERGERÄTS FÜR ZUTRITTSEINRICHTUNGEN, ZUTRITTSSYSTEM UND COMPUTERPROGRAMMPRODUKT**
METHOD FOR PREPARING A CONTROL DEVICE FOR ACCESS DEVICES FOR COMMISSIONING, ACCESS SYSTEM AND COMPUTER PROGRAM PRODUCT
PROCÉDÉ DE PRÉPARATION D'UNE MISE EN SERVICE D'UN APPAREIL DE COMMANDE POUR DISPOSITIFS D'ACCÈS, SYSTÈME D'ACCÈS ET PRODUIT-PROGRAMME INFORMATIQUE

(43) Veröffentlichungstag der Anmeldung: 22.02.2023
(73) Patentinhaber: dormakaba Schweiz AG, 8153 Rümlang (CH); dormakaba España S.A.U., 28050 Madrid (ES)
(72) Erfinder: Rappel, Christian, Wetzikon (CH); Guerra, Pedro, Madrid (ES)
(74) Vertreter: Balder IP Law, S.L.

(56) Entgegenhaltungen:
- EP-A1- 3 103 246
- EP-A1- 3 349 185
- US-A1- 2018 075 731
- US-A1- 2018 112 891

## Beschreibung

Die vorliegende Erfindung betrifft ein Verfahren zur Inbetriebnahmevorbereitung eines Steuergeräts für Zutrittseinrichtungen, wobei mindestens eine Zutrittseinrichtung mit dem Steuergerät kommunikativ verbunden ist. Ferner betrifft die Erfindung ein Zutrittssystem mit mindestens einer Zutrittseinrichtung und mindestens einem Steuergerät. Des Weiteren betrifft die Erfindung ein Computerprogrammprodukt.

Bei der Planung von Gebäuden und Zutrittslösungen von Gebäuden oder Arealen werden Pläne erstellt, die anzeigen, welche Zutrittseinrichtungen an welcher Stelle des Gebäudes eingeplant sind. Moderne Zutrittslösungen umfassen dabei häufig vielseitige Funktionen, die einer elektrischen Steuerung bedürfen, beispielsweise automatische Türvorrichtungen, Sicherheitsfunktionen, Alarmfunktionen und Schlossfunktionen. Zur Steuerung der Zutrittseinrichtungen werden daher elektrische Steuergeräte eingeplant und installiert.

In der Praxis erfolgt der Einbau der Zutrittseinrichtungen und der Steuergeräte dabei anhand der erstellten Pläne, wobei die vorgesehenen Gerätetypen an den vorgesehenen Stellen im Gebäude angeordnet und eingebaut werden. Es ist dabei typischerweise nicht exakt bekannt, welches Steuergerät an welcher Stelle im Gebäude eingebaut wurde und mit welchen Zutrittseinrichtungen ein eingebautes Steuergerät verbunden wurde. Die spätere Inbetriebnahme der Steuergeräte und Zutrittseinrichtungen sowie deren funktionale Konfiguration, insbesondere mithilfe passender Software, ist daher typischerweise umständlich sowie zeit- und kostenintensiv. Häufig erfolgt die Inbetriebnahme der Zutrittseinrichtungen und der Steuergeräte mit zeitlichem Versatz nach deren Anordnung und Einbau im Gebäude und häufig durch eigenes Fachpersonal.

Aus dem Stand der Technik ist aus US 2018/0075731 A1 ein Verfahren zur Inbetriebnahmevorbereitung eines Steuergeräts für Zutrittseinrichtungen bekannt, wobei eine Zutrittseinrichtung mit dem Steuergerät kommunikativ verbunden ist. Die US 2018/0075731 A1 offenbart dabei ein Testsystem sowie ein entsprechendes Verfahren eines Sicherheitssystems, wobei ein mobiles Endgerät durch einen Bediener, etwa einen Installateuer, vorgesehen ist. Das Testsystem kann dabei dem mobilen Endgerät Testinformationen zur Verfügung stellen, wobei die Testinformation auch von Geräten übermittelte Statusinformationen beinhalten können.

Des Weiteren ist aus EP 3 349 185 A1 ein Verfahren zur Durchführung einer Funktionsüberprüfung bei einem Türsystem bekannt, wobei eine zumindest teilweise automatisiert betriebene Türkomponente vorhanden ist, und das Verfahren die folgenden Schritte umfasst: (i) Initiieren der Funktionsprüfung bei dem Türsystem durch Übertragung einer Initiierungsinformation; (ii) Bestimmen eines Antriebparameters für die Türfunktion; (iii) Auswerten des Antriebsparameters und somit Bestimmen eines Funktionsprüfergebnisses; sowie (iv) Bereitstellen des Funktionsprüfergebisses zur türsystemfernen Anzeige für einen Benutzer einer Kommunikationseinheit.

Ferner ist aus EP 3 103 246 A1 ein einheitliches Protokoll zur Kommunikation zwischen einer Steuervorrichtung und einer beliebigen Anzahl anderer elektronischer Vorrichtungen, die gesteuert werden sollen ("Zugriffsvorrichtungen"), bekannt. Eine Steuerung kann zum Beispiel auf einem Desktop-Computer, einem Laptop-Computer, einem Tablet-Computer, einem Mobiltelefon, einer anderen handgehaltenen oder tragbaren Rechenvorrichtung implementiert sein.

Vor diesem Hintergrund stellt sich die Aufgabe, ein vorteilhaftes Verfahren zur Inbetriebnahmevorbereitung eines Steuergeräts für Zutrittseinrichtungen bereitzustellen, wobei vorzugsweise technische Fehlfunktionen und Fehlkonfigurationen verringert werden können und/oder Kosten und/oder Zeit gespart werden können.

Die Aufgabe wird gelöst durch ein Verfahren zur Inbetriebnahmevorbereitung eines Steuergeräts für Zutrittseinrichtungen, wobei mindestens eine Zutrittseinrichtung mit dem Steuergerät kommunikativ verbunden ist,
wobei das Steuergerät eine Signalausgabevorrichtung zur Ausgabe eines wahrnehmbaren Signals aufweist,
wobei das Verfahren die folgenden Schritte umfasst:
   a) Detektieren einer Aktion eines Installateurs an einer Zutrittseinrichtung,
   b) Senden eines auf der Aktion des Installateurs beruhenden Triggersignals von der Zutrittseinrichtung an das mit der Zutrittseinrichtung verbundene Steuergerät, sowie
   c) Empfangen des Triggersignals durch das Steuergerät,
   d) Ausgabe, durch das Steuergerät, eines wahrnehmbaren Signals mittels der Signalausgabevorrichtung als Reaktion auf das in Schritt c) durch das Steuergerät empfangene Triggersignal.

Mithilfe der vorliegenden Erfindung kann auf effiziente Art erreicht werden, dass für die Inbetriebnahme der Zutrittseinrichtungen und Steuergeräte und deren Funktionen genau bekannt ist, welches Steuergerät mit welchen Zutrittseinrichtungen verbunden wurde. Somit kann insbesondere eine effiziente Konfiguration des Steuergeräts und/oder der Zutrittseinrichtungen gemäß den für diese Zutrittseinrichtungen geplanten Funktionen erfolgen. Es kann mithilfe des erfindungsgemäßen Verfahrens insbesondere ermittelt werden, wo in einem Gebäude oder Areal welches Steuergerät angeordnet oder verbaut wurde. Durch die vorliegende Erfindung kann der Zeitaufwand und der Kostenaufwand bei der Inbetriebnahme eines Steuergeräts für Zutrittseinrichtungen verringert werden. Ferner ist es erfindungsgemäß möglich, eine fehlerhafte Anordnung eines Steuergeräts in einem Gebäude frühzeitig zu identifizieren und Fehlkonfigurationen von Steuergeräten und Zutrittseinrichtungen zu vermeiden.

Das erfindungsgemäße Verfahren ist insbesondere ein computerimplementiertes Verfahren, bei dem ein, mehrere oder alle Schritte des Verfahrens computerimplementiert ausgeführt werden.

Vorteilhafte Weiterbildungen und Ausgestaltungen der vorliegenden Erfindung können den abhängigen Ansprüchen entnommen werden.

Gemäß einer Ausführungsform der vorliegenden Erfindung ist es vorgesehen, dass das Steuergerät eine Kommunikationsschnittstelle zur informationstechnischen Kommunikation mit einem mobilen Endgerät aufweist. Vorzugsweise erfolgt in Schritt d) weiterhin eine Aussendung, durch das Steuergerät, eines informationstechnischen Signals oder eine Veränderung eines bestehenden informationstechnischen Dauersignals des Steuergeräts mittels der Kommunikationsschnittstelle.

Gemäß einer Ausführungsform der vorliegenden Erfindung ist es vorgesehen, dass das mobile Endgerät eine Kommunikationsschnittstelle zur informationstechnischen Kommunikation mit dem Steuergerät aufweist.

Gemäß einer Ausführungsform der vorliegenden Erfindung ist es vorgesehen, dass jede Zutrittseinrichtung mindestens eine Zutrittskomponente umfasst, wobei in Schritt a) die Aktion eines Installateurs an einer Zutrittskomponente einer Zutrittseinrichtung erfolgt und detektiert wird. Darunter, dass eine Zutrittseinrichtung eine Zutrittskomponente umfasst, kann gemäß einer Ausführungsform der vorliegenden Erfindung verstanden werden, dass die Zutrittskomponente mit der Zutrittseinrichtung verbunden ist und/oder ein Teil der Zutrittseinrichtung ist. Es ist denkbar, dass die Zutrittskomponenten einer Zutrittseinrichtung eine, mehrere oder alle der folgenden Zutrittskomponenten umfassen:
- ein Türelement und/oder ein Vereinzelungselement,
- ein Scharnier,
- ein Brandschutzelement,
- ein Schloss, insbesondere ein elektrisches Schloss,
- eine Öffnungs- und/oder Schließvorrichtung für ein Türelement, insbesondere umfassend einen Aktuator und/oder Motor,
- eine Personenkontroll- und/oder Identitätskontrolleinrichtung, insbesondere ein Lesegerät für einen Pass,
- eine Zutrittskontrolleinrichtung, insbesondere eine Code- oder Passwortkontrolle,
- einen biometrischen Sensor,
- einen optischen Sensor,
- einen akustischen Sensor,
- eine elektrische Strom- und/oder Spannungsversorgung,
- eine Anzeigeeinrichtung,
- ein Leuchtmittel,
- eine akustische Ausgabevorrichtung,
- eine Warn- und/oder Sicherheitsvorrichtung.

Gemäß einer Ausführungsform der vorliegenden Erfindung ist es vorgesehen, dass das über die Kommunikationsschnittstelle des Steuergeräts ausgesendete Signal oder Dauersignal ein Nahbereichskommunikationssignal, vorzugsweise ein Bluetooth-Signal bzw. Bluetooth-Dauersignal, ein Bluetooth-Low-Energy-Signal, ein ZigBee-Signal oder ein Wi-Fi-Signal, ist. Somit ist es in vorteilhafter Weise möglich, dass das von dem Steuergerät in Schritt d) ausgesendete Signal oder Dauersignal mithilfe einer drahtlosen Kommunikationstechnologie ausgesendet wird und vorzugsweise zumindest in der Umgebung des Steuergeräts durch ein mobiles Endgerät empfangbar ist. Das in Schritt d) durch das Steuergerät gesendete Signal betrifft beispielsweise ein Pairing, insbesondere ein Bluetooth-Pairing, des mobilen Endgeräts und des Steuergeräts oder ein Advertising des Steuergeräts oder eine von dem Steuergerät gesendete Triggerinformation. Es ist denkbar, dass mithilfe des Signals und/oder Dauersignals des Steuergeräts in Schritt d) eine Identifikationsinformation, beispielsweise eine Seriennummer und/oder UUID (Universally Unique Identifier), des Steuergeräts durch das Steuergerät übermittelt wird. Somit ist die Identität des Steuergeräts für das mobile Endgerät ermittelbar.

Gemäß einer Ausführungsform der vorliegenden Erfindung ist es vorgesehen, dass das Verfahren umfasst:
e) Detektieren des ausgesendeten Signals bzw. Detektieren der Veränderung des bestehenden Dauersignals des Steuergeräts durch das mobile Endgerät. Aus dem detektierten Signal bzw. Dauersignal kann das mobile Endgerät vorzugsweise die Identität des Steuergeräts ableiten.

Gemäß einer Ausführungsform der vorliegenden Erfindung ist es vorgesehen, dass das mobile Endgerät über eine direkte oder indirekte Netzwerkverbindung mit einem Server kommuniziert, wobei der Server über eine digitale Repräsentation der Zutrittseinrichtungen verfügt,
wobei die digitale Repräsentation Zusammengehörigkeitsinformationen umfasst, aus denen ableitbar ist, welche der Zutrittseinrichtungen zusammen einem gemeinsamen Steuergerät zugeordnet und mit diesem kommunikativ verbunden sind oder verbunden sein sollten,
wobei das mobile Endgerät vorzugsweise auf die Zusammengehörigkeitsinformationen der digitalen Repräsentation zugreift. Die Zusammengehörigkeitsinformationen umfassen insbesondere Informationen dazu, welche Zutrittseinrichtungen, vorzugsweise gemäß einem Schließplan und/oder Gebäudeplan, gemeinsam einem Steuergerät zugeordnet sind. Derart können anhand der Zusammengehörigkeitsinformationen die zusammengehörenden Zutrittseinrichtungen, die zusammen einem gemeinsamen Steuergerät zugeordnet sind, identifiziert werden. Gemäß einer Ausführungsform der vorliegenden Erfindung umfassen die Zusammengehörigkeitsinformationen Identifikationsinformationen der Zutrittseinrichtungen und Steuergeräte sowie Zuordnungsinformationen, aus denen ableitbar ist, welche der Zutrittseinrichtungen zusammen einem gemeinsamen Steuergerät zugeordnet und mit diesem kommunikativ verbunden sind oder verbunden sein sollten.

Gemäß einer Ausführungsform der vorliegenden Erfindung ist es vorgesehen, dass die Zusammengehörigkeitsinformationen als Teil eines Schließplans und/oder Gebäudeplans erzeugt werden. Der Schließplan und/oder Gebäudeplan umfasst insbesondere Informationen dazu, welche Typen von Zutrittseinrichtungen und/oder Zutrittskomponenten an welchen Stellen eines Gebäudes und/oder Areals verbaut werden sollen. Beispielsweise umfasst der Schließplan und/oder Gebäudeplan Informationen dazu, welcher Türtyp an welcher Stelle verbaut wird, welcher Schlosstyp an welcher Stelle verbaut wird, welches Lesegerät an welcher Stelle verbaut wird, und/oder Informationen dazu, ob es sich bei einer Zutrittseinrichtung um eine Brandschutztür handelt, usw.

Gemäß einer Ausführungsform der vorliegenden Erfindung ist es vorgesehen, dass das Verfahren umfasst:
- Identifikation zusammengehörender Zutrittseinrichtungen, die zusammen einem gemeinsamen Steuergerät zugeordnet sind, anhand der Zusammengehörigkeitsinformationen der digitalen Repräsentation,
- Anzeige der zusammengehörenden Zutrittseinrichtungen auf einer Anzeigevorrichtung des mobilen Endgeräts,
- Identifikation, mittels des mobilen Endgeräts, desjenigen Steuergeräts, mit dem eine der zusammengehörenden Zutrittseinrichtungen kommunikativ verbunden ist mittels der Verfahrensschritte a) bis e),
- und Rückschließen darauf, dass das identifizierte Steuergerät als gemeinsames Steuergerät für alle zusammengehörenden Zutrittseinrichtungen mit allen zusammengehörenden Zutrittseinrichtungen kommunikativ verbunden ist,
- vorzugsweise Hinterlegen eines Verifikationsindikators auf dem mobilen Endgerät und/oder auf dem Server für diejenigen zusammengehörenden Zutrittseinrichtungen, deren zugehöriges Steuergerät identifiziert ist und/oder Verknüpfen der jeweiligen Zutrittseinrichtungen mit der zugehörigen digitalen Repräsentation. Hierdurch kann eine besonders vorteilhafte Identifikation der gemeinsam verbauten Zutrittseinrichtungen und Steuergeräte erfolgen, wodurch die Inbetriebnahme erleichtert wird und Fehler und Fehlkonfigurationen vermieden werden können.

Gemäß einer Ausführungsform der vorliegenden Erfindung ist es vorgesehen, dass der Installateur eine Eingabe in das mobile Endgerät tätigt, wobei die Eingabe Informationen darüber umfasst,
an welcher Zutrittseinrichtung eine Aktion durchgeführt wird oder wurde, und/oder
welches Steuergerät Schritt d) durchgeführt hat. Es ist insbesondere denkbar, dass mithilfe der Eingabe Identifikationsinformationen, betreffend die Zutrittseinrichtung, an der die Aktion durchgeführt wird oder wurde, und/oder betreffend das Steuergerät, das Schritt d) durchgeführt hat, ableitbar sind oder eingegebenen werden. Hierdurch kann eine vorteilhafte Identifikation und Zuordnung erfolgen.

Gemäß einer Ausführungsform der vorliegenden Erfindung ist es vorgesehen, dass das mobile Endgerät und/oder ein Server über eine digitale Repräsentation der Zutrittseinrichtungen verfügt,
wobei die digitale Repräsentation Konfigurationsdaten umfasst, durch die eine Soll-Funktionsweise der Zutrittseinrichtungen definiert ist, wobei das Verfahren ferner umfasst:
- Verfügbarmachen der Konfigurationsdaten auf einem zugehörigen Steuergerät, um das Steuergerät in die Lage zu versetzen, die mit ihm in kommunikativer Verbindung stehenden Zutrittseinrichtungen gemäß der Soll-Funktionsweise zu steuern;
   und/oder
- Verfügbarmachen der Konfigurationsdaten auf einem zugehörigen Steuergerät und Weiterleiten jeweils von Teilen der Konfigurationsdaten an die mit diesem Steuergerät in kommunikativer Verbindung stehenden Zutrittseinrichtungen, um die Zutrittseinrichtungen gemäß ihrer Soll-Funktionsweise zu konfigurieren; und/oder
- Verfügbarmachen der Konfigurationsdaten auf einem zugehörigen Steuergerät und Weiterleiten jeweils von Teilen der Konfigurationsdaten an die Zutrittskomponenten der mit diesem Steuergerät in kommunikativer Verbindung stehenden Zutrittseinrichtungen, um die Zutrittskomponenten gemäß ihrer Soll-Funktionsweise zu konfigurieren. Hierdurch kann eine effiziente, automatisierte und fehlerresistente Einrichtung und Konfiguration des Steuergeräts und/oder der Zutrittseinrichtungen gemäß ihrer geplanten und vorgesehenen Funktionen erfolgen. Es ist dabei gemäß einer Ausgestaltung möglich, dass das Steuergerät zur Steuerung der Zutrittseinrichtungen und/oder deren Zutrittskomponenten konfiguriert wird. Ein besonderer Vorteil ergibt sich alternativ gemäß Ausgestaltungen der vorliegenden Erfindung, bei denen ein Weiterleiten jeweils von Teilen der Konfigurationsdaten an die Zutrittseinrichtungen und/oder deren Zutrittskomponenten erfolgt. In diesen Fällen kann eine besonders vorteilhafte Sicherheit erreicht werden, da die Zutrittseinrichtungen und/oder Zutrittskomponenten ihre jeweilige Konfiguration übermittelt bekommen. Besonders vorteilhaft sind die Zutrittseinrichtungen und/oder Zutrittskomponenten im Betrieb dadurch nicht oder lediglich teilweise auf eine Steuerung durch das Steuergerät angewiesen. Im Falle eines unautorisierten Zugriffs auf das Steuergerät durch eine Drittperson oder durch Schadsoftware und/oder im Falle einer Manipulation des Steuergeräts im Betrieb, kann somit eine Manipulation der Zutrittseinrichtungen und/oder Zutrittskomponenten verhindert werden. Dies ist beispielsweise für sicherheitsrelevante Aspekte von Zutrittseinrichtungen von besonderem Vorteil. Beispielsweise kann in diesem Fall durch eine Manipulation des Steuergeräts eine als Schlossvorrichtung ausgebildete Zutrittskomponente nicht durch Schadsoftware oder eine Drittperson manipuliert werden. Gemäß Ausführungsformen, bei denen ein Weiterleiten jeweils von Teilen der Konfigurationsdaten an die Zutrittseinrichtungen und/oder deren Zutrittskomponenten erfolgt, ist es denkbar:
   - dass die entsprechenden Konfigurationsdaten von dem Steuergerät gelöscht werden oder alternativ
   - dass die Konfigurationsdaten auf dem Steuergerät gespeichert bleiben und insbesondere nicht gelöscht werden.

Gemäß einer Ausführungsform der vorliegenden Erfindung ist es vorgesehen, dass die digitale Repräsentation der Zutrittseinrichtungen auf dem Server verfügbar ist, wobei das mobile Endgerät über eine direkte oder indirekte Netzwerkverbindung mit dem Server kommuniziert und über die Kommunikationsschnittstelle mit dem Steuergerät kommuniziert, wobei das mobile Endgerät die Konfigurationsdaten vom Server abruft und an das Steuergerät sendet. Gemäß einer alternativen Ausführungsform der vorliegenden Erfindung ist es möglich, dass die digitale Repräsentation der Zutrittseinrichtungen auf dem Server verfügbar ist, wobei das Steuergerät über eine direkte oder indirekte Netzwerkverbindung mit dem Server kommuniziert und die Konfigurationsdaten vom Server abruft. Die Netzwerkverbindung kann jeweils drahtgebunden und/oder drahtlos ausgebildet sein. Besonders bevorzugt ist die Netzwerkverbindung mithilfe eines Telekommunikationsnetzes ausgebildet.

Gemäß einer Ausführungsform der vorliegenden Erfindung ist es vorgesehen, dass das mobile Endgerät über die Kommunikationsschnittstelle mit dem Steuergerät kommuniziert und den Abruf der Konfigurationsdaten auslöst. Die Übermittlung der Konfigurationsdaten an das Steuergerät kann somit durch das mobile Endgerät und/oder einen Installateur, der das mobile Endgerät bedient, ausgelöst werden.

Gemäß einer Ausführungsform der vorliegenden Erfindung ist es vorgesehen, dass das mobile Endgerät die Konfigurationsdaten vorab vom Server abruft, speichert und zu einem späteren Zeitpunkt die Konfigurationsdaten über die Kommunikationsschnittstelle an ein zugehöriges Steuergerät sendet. Hierdurch ist es in vorteilhafter Weise möglich, dass ein wählbarer Zeitabstand zwischen der Übermittlung der Konfigurationsdaten von dem Server an das mobile Endgerät und der Übermittlung der Konfigurationsdaten zwischen dem mobilen Endgerät und dem Steuergerät liegt. Insbesondere erfolgt dabei zumindest eine Zwischenspeicherung der Konfigurationsdaten auf dem mobilen Endgerät. Es kann dadurch ein besonders flexibler Konfigurationsprozess erfolgen.

Gemäß einer Ausführungsform der vorliegenden Erfindung ist es denkbar, dass unfertige und/oder unvollständige Konfigurationsdaten dem Steuergerät vor und/oder während den Schritten a) bis d) bereitgestellt werden. Die unfertigen und/oder unvollständigen Konfigurationsdaten werden dem Steuergerät, insbesondere mithilfe des mobilen Endgeräts und/oder des Servers, zumindest teilweise übermittelt bevor die Identifizierung, mit welcher Zutrittseinrichtung oder welchen zusammengehörenden Zutrittseinrichtungen das Steuergerät verbunden ist, vollendet wurde. Nach den Schritten a) bis d) oder a) bis e), also insbesondere nachdem identifiziert wurde, mit welchen Zutrittseinrichtungen das Steuergerät verbunden ist, wird dann mithilfe des mobilen Endgeräts und/oder des Servers eine Nachkonfiguration und/oder Anpassung der unfertigen und/oder unvollständigen Konfigurationsdaten durchgeführt, insbesondere derart, dass dem Steuergerät die finalen Konfigurationsdaten zur Verfügung stehen, die es zur Steuerung der Zutrittseinrichtungen gemäß ihrer Soll-Funktionsweise oder zur Weiterleitung an die Zutrittseinrichtungen oder deren Zutrittskomponenten benötigt. Hierdurch kann in besonders vorteilhafter Weise Zeit gespart werden, da ein Großteil der Datenübermittlung, nämlich die Übermittlung der unfertigen und/oder unvollständigen Konfigurationsdaten an das Steuergerät, bereits parallel zu den Schritten der Identifikation des Steuergeräts bzw. der Ermittlung, welches Steuergerät mit welchen Zutrittseinrichtungen verbunden wurde, erfolgen kann.

Gemäß einer Ausführungsform der vorliegenden Erfindung ist es vorgesehen, dass eine Zutrittskomponente einer Zutrittseinrichtung bei einer Aktion eines Installateurs an der Zutrittskomponente Schritt b) durchführt und mittels des in Schritt c) empfangenen Triggersignals eine Zuordnung der Zutrittskomponente zu der zugehörigen Zutrittseinrichtung erfolgt. Hierdurch wird eine vorteilhafte Identifikation der mit einer Zutrittseinrichtung kommunikativ verbunden Zutrittskomponenten möglich. Es kann somit ermittelt werden, welche Zutrittskomponenten an einer Zutrittseinrichtung verbaut wurden. Dies ermöglicht eine besonders vorteilhafte Inbetriebnahme und Konfiguration. Es ist denkbar, dass der Server weitere Zusammengehörigkeitsinformationen dazu umfasst, welche Zutrittskomponenten gemeinsam einer Zutrittseinrichtung zugeordnet sind oder sein sollten. Durch einen Abruf der weiteren Zusammengehörigkeitsinformationen von dem Server, insbesondere durch das mobile Endgerät, kann somit eine Identifikation derjenigen Zutrittseinrichtung erfolgen, die mit der Zutrittskomponente verbunden ist, an der Schritt b) durchgeführt wurde. Es kann ferner darauf rückgeschlossen werden, dass diese Zutrittseinrichtung als gemeinsame Zutrittseinrichtung mit allen Zutrittskomponenten verbunden ist, die gemäß der weiteren Zusammengehörigkeitsinformationen dieser Zutrittseinrichtung zugeordnet sind.

Ein weiterer Gegenstand der vorliegenden Erfindung ist ein Zutrittssystem mit mindestens einer Zutrittseinrichtung und mindestens einem Steuergerät, wobei die mindestens eine Zutrittseinrichtung vorzugsweise mindestens eine Zutrittskomponente umfasst, wobei das Zutrittssystem eingerichtet und ausgebildet ist, um ein Verfahren gemäß einer Ausführungsform der vorliegenden Erfindung durchzuführen. Insbesondere umfasst das Zutrittssystem Computermittel, die zur Ausführung eines Verfahrens gemäß einer Ausführungsform der vorliegenden Erfindung konfiguriert sind.

Gemäß einer Ausführungsform der vorliegenden Erfindung ist es vorgesehen, dass zwischen dem Steuergerät und einer zu dem Steuergerät zugehörigen Zutrittseinrichtung eine kommunikative Verbindung ausgebildet ist, insbesondere eine drahtlose und/oder drahtgebundene Verbindung. Es ist insbesondere denkbar, dass ein Bus-System (Datenbus) zwischen dem Steuergerät und einer oder mehreren dem Steuergerät zugehörigen Zutrittseinrichtungen ausgebildet ist. Es ist denkbar, dass die einzelnen Zutrittskomponenten einer Zutrittseinrichtung jeweils eine drahtlose und/oder drahtgebundene kommunikative Verbindung mit der Zutrittseinrichtung und/oder mit dem Steuergerät aufweisen. Es ist insbesondere denkbar, dass die Zutrittskomponenten mit der Zutrittseinrichtung und/oder mit dem Steuergerät über ein Bus-System (Datenbus) verbunden sind. Das mobile Endgerät und/oder das Steuergerät können vorzugsweise mithilfe von drahtlosen Kommunikationsschnittstellen Signale und/oder Dauersignale versenden und/oder empfangen.

Ein weiterer Gegenstand der vorliegenden Erfindung ist ein Computerprogrammprodukt, umfassend Befehle, die bewirken, dass eine Vorrichtung nach Anspruch 15 ein Verfahren gemäß einer Ausführungsform der vorliegenden Erfindung durchführt.

Die Merkmale, Ausführungsformen und Vorteile, die im Zusammenhang mit einem der erfindungsgemäßen Gegenstände beschrieben worden sind, können jeweils auch für die weiteren erfindungsgemäßen Gegenstände Anwendung finden. Insbesondere können für das erfindungsgemäße Zutrittssystem, das beschriebene Steuergerät, die beschriebene Zutrittseinrichtung und das erfindungsgemäße Computerprogrammprodukt dabei die Merkmale, Ausführungsformen und Vorteile Anwendung finden, die bereits im Zusammenhang mit dem erfindungsgemäßen Verfahren oder im Zusammenhang mit einer Ausführungsform des erfindungsgemäßen Verfahrens beschrieben worden sind. Für das erfindungsgemäße Verfahren, das beschriebene Steuergerät, die beschriebene Zutrittseinrichtung und das erfindungsgemäße Computerprogrammprodukt können dabei die Merkmale, Ausführungsformen und Vorteile Anwendung finden, die bereits im Zusammenhang mit dem erfindungsgemäßen Zutrittssystem oder im Zusammenhang mit einer Ausführungsform des erfindungsgemäßen Zutrittssystems beschrieben worden sind.

Nachfolgend sollen weitere Vorteile und Einzelheiten der Erfindung anhand der in der Zeichnung dargestellten Ausführungsbeispiele erläutert werden. Hierin zeigen
- Fig. 1: eine schematische Darstellung eines mobilen Endgeräts und eines Zutrittssystems gemäß einem ersten Ausführungsbeispiel der vorliegenden Erfindung;
- Fig. 2: eine schematische Darstellung eines mobilen Endgeräts und eines Zutrittssystems gemäß einem zweiten Ausführungsbeispiel der vorliegenden Erfindung;
- Fig. 3: eine schematische Darstellung einer Zutrittseinrichtung gemäß einer Ausführungsform der vorliegenden Erfindung;
- Fig. 4: eine schematische Darstellung eines Verfahrens gemäß einer Ausführungsform der vorliegenden Erfindung;
- Fig. 5: eine schematische Darstellung eines Verfahrens gemäß einer Ausführungsform der vorliegenden Erfindung;
- Fig. 6: eine schematische Darstellung eines Verfahrens gemäß einer Ausführungsform der vorliegenden Erfindung, wobei Fig. 6 die beiden Teilfiguren 6a und 6b umfasst.

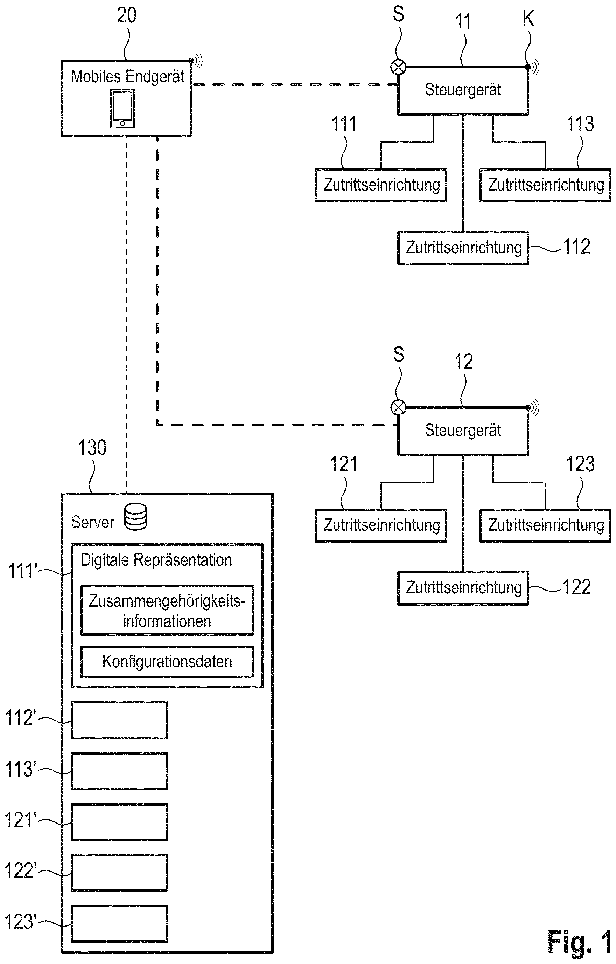

In Fig.1 ist ein System gemäß einem ersten Ausführungsbeispiel der vorliegenden Erfindung gezeigt. Ein Steuergerät 11 ist mit einer oder mehreren Zutrittseinrichtungen 111, 112, 113 verbunden. Das Steuergerät 11 und die dem Steuergerät 11 zugehörigen Zutrittseinrichtungen 111, 112, 113 können über eine drahtlose und/oder drahtgebundene Verbindung kommunizieren. Bevorzugt ist eine kabelgebundene Verbindung, insbesondere ein Bus-System, zwischen dem Steuergerät 11 und den zugehörigen Zutrittseinrichtungen 111, 112, 113 ausgebildet. Das Steuergerät 11 und die Zutrittseinrichtungen 111, 112, 113 sind insbesondere in oder an einem Gebäude und/oder Areal verbaut.

Ferner ist es möglich, dass ein weiteres Steuergerät 12 in oder an dem Gebäude und/oder Areal vorhanden ist. Das weitere Steuergerät 12 ist mit einer oder mehreren weiteren Zutrittseinrichtungen 121, 122, 123 verbunden. Das weitere Steuergerät 12 und die dem weiteren Steuergerät zugehörigen weiteren Zutrittseinrichtungen 121, 122, 123 können über eine drahtlose und/oder drahtgebundene Verbindung, insbesondere ein Bus-System, kommunizieren.

Das Steuergerät 11 umfasst eine Kommunikationsschnittstelle K zur informationstechnischen Kommunikation mit einem mobilen Endgerät 20 und/oder eine Signalausgabevorrichtung S zur Ausgabe eines wahrnehmbaren Signals. Die über die Kommunikationsschnittstelle K des Steuergeräts 11 ausgesendeten informationstechnischen Signale oder Dauersignale, die durch das mobile Endgerät 20 empfangbar sind, sind vorzugsweise Nahbereichskommunikationssignale, besonders bevorzugt Bluetooth-Signale bzw. Bluetooth-Dauersignale, Bluetooth-Low-Energy-Signale, ZigBee-Signale oder Wi-Fi-Signale. Das weitere Steuergerät 12 umfasst ebenfalls eine entsprechende Kommunikationsschnittstelle zur informationstechnischen Kommunikation mit einem mobilen Endgerät 20 und/oder eine Signalausgabevorrichtung zur Ausgabe eines wahrnehmbaren Signals.

Bei dem mobilen Endgerät 20 kann es sich beispielsweise um ein tragbares Mobiltelefon oder eine tragbare Computereinrichtung handeln. Das mobile Endgerät 20 wird vorzugsweise von einem Installateur mitgeführt.

Das mobile Endgerät 20 ist ferner zur Kommunikation mit einem Server 130 eingerichtet, insbesondere mithilfe einer drahtlosen Kommunikationsverbindung. Es ist vorzugsweise denkbar, dass das mobile Endgerät 20 über eine entsprechende Schnittstelle des mobilen Endgeräts 20 und mithilfe eines Telekommunikationsnetzes mit dem Server 130 kommuniziert. Der Server 130 umfasst eine Speichereinrichtung, in der digitale Repräsentationen 111', 112', 113`, 121', 122`, 123', insbesondere digital twins, der Zutrittseinrichtungen 111, 112, 113, 121, 122, 123 hinterlegt sind. Die digitalen Repräsentationen 111', 112', 113`, 121`, 122', 123' umfassen Zusammengehörigkeitsinformationen und vorzugsweise Konfigurationsdaten. Aus den Zusammengehörigkeitsinformationen für die Zutrittseinrichtungen 111, 112, 113, 121, 122, 123 ist ableitbar, welche der Zutrittseinrichtungen 111, 112, 113, 121, 122, 123 zusammen einem gemeinsamen Steuergerät 11, 12 zugeordnet und mit diesem kommunikativ verbunden sind oder verbunden sein sollten. Solche Zusammengehörigkeitsinformationen werden beispielsweise während der Planungsphase des Gebäudes oder der Planungsphase der technischen Gebäudeausrüstung (TGA) erzeugt. Anhand der Zusammengehörigkeitsinformationen können somit beispielsweise die zusammengehörenden Zutrittseinrichtungen 111, 112, 113 identifiziert werden, die zusammen dem gemeinsamen Steuergerät 11 zugeordnet sind. Das mobile Endgerät 20 kann über seine Kommunikationsverbindung zum Server 130 auf die Zusammengehörigkeitsinformationen zugreifen.

Die Konfigurationsdaten der digitalen Repräsentationen 111', 112', 113`, 121`, 122', 123` sind zur Einrichtung einer Soll-Funktionsweise, also insbesondere einer geplanten und/oder vorgesehenen Funktion, für die entsprechenden Zutrittseinrichtungen 111, 112, 113, 121, 122, 123 vorgesehen. Die Konfigurationsdaten können von dem Server 130 an das mobile Endgerät 20 übermittelt werden und von dem mobilen Endgerät 20 an die Steuergeräte 11, 12 übermittelt werden.

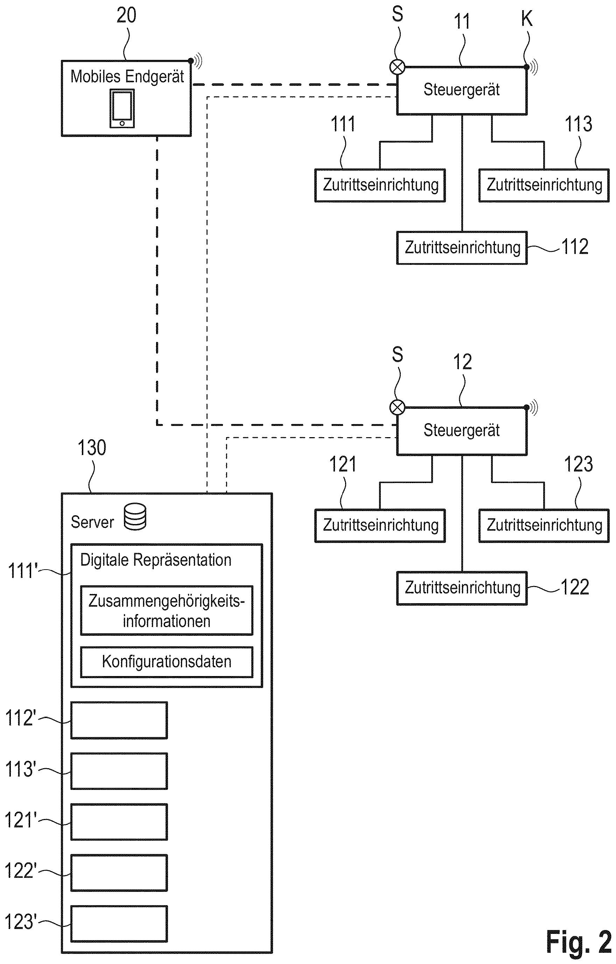

In Fig.2 ist ein System gemäß einem zweiten Ausführungsbeispiel der vorliegenden Erfindung gezeigt. Das zweite Ausführungsbeispiel ähnelt dem ersten Ausführungsbeispiel mit dem Unterschied, dass die Steuergeräte 11, 12 selbst eine kommunikative Verbindung zu dem Server 130 aufweisen, beispielsweise mithilfe eines Telekommunikationsnetzes. Es ist somit denkbar, dass die Zusammengehörigkeitsinformationen und Konfigurationsdaten von dem Server 130 an das Steuergerät 11, 12 übermittelt werden können. Das Abrufen von Zusammengehörigkeitsinformationen und Konfigurationsdaten von dem Serversystem 130 durch das mobile Endgerät 20 kann dementsprechend über eine indirekte Netzwerkverbindung, insbesondere über das Steuergerät 11, 12, erfolgen und/oder ausgelöst werden.

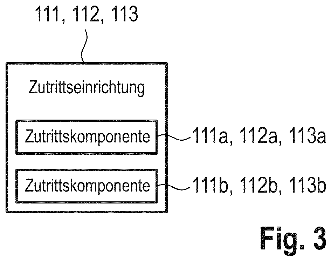

In Fig.3 ist eine Zutrittseinrichtung 111, 112, 113 gemäß einer Ausführungsform der vorliegenden Erfindung gezeigt. Die Zutrittseinrichtung 111, 112, 113 kann beispielsweise eine Tür- und/oder Vereinzelungsvorrichtung umfassen, die an einem Zugang und/oder Ausgang eines Gebäudes, eines Gebäudeteils, eines Raums und/oder eines Areals angeordnet ist. Die Zutrittseinrichtung 111, 112, 113 weist eine oder mehrere Zutrittskomponenten 111a, 112a, 113a, 111b, 112b, 113b auf oder ist mit diesen verbunden. Die Zutrittskomponenten 111a, 112a, 113a, 111b, 112b, 113b können dabei vielseitige Funktionen übernehmen. Beispielsweise können eine, mehrere oder alle der folgenden Zutrittskomponenten 111a, 112a, 113a, 111b, 112b, 113b an einer Zutrittseinrichtung 111, 112, 113 vorhanden sein:
- ein Türelement und/oder ein Vereinzelungselement,
- ein Scharnier,
- ein Brandschutzelement,
- ein Schloss, insbesondere ein elektrisches Schloss,
- eine Öffnungs- und/oder Schließvorrichtung für ein Türelement, insbesondere umfassend einen Aktuator und/oder Motor,
- eine Personenkontroll- und/oder Identitätskontrolleinrichtung, insbesondere ein Lesegerät für einen Pass,
- eine Zutrittskontrolleinrichtung, insbesondere eine Code- oder Passwortkontrolle,
- ein biometrischer Sensor,
- ein optischer Sensor,
- ein akustischer Sensor,
- eine elektrische Strom- und/oder Spannungsversorgung,
- eine Anzeigeeinrichtung,
- ein Leuchtmittel,
- eine akustische Ausgabevorrichtung,
- eine Warn- und/oder Sicherheitsvorrichtung.

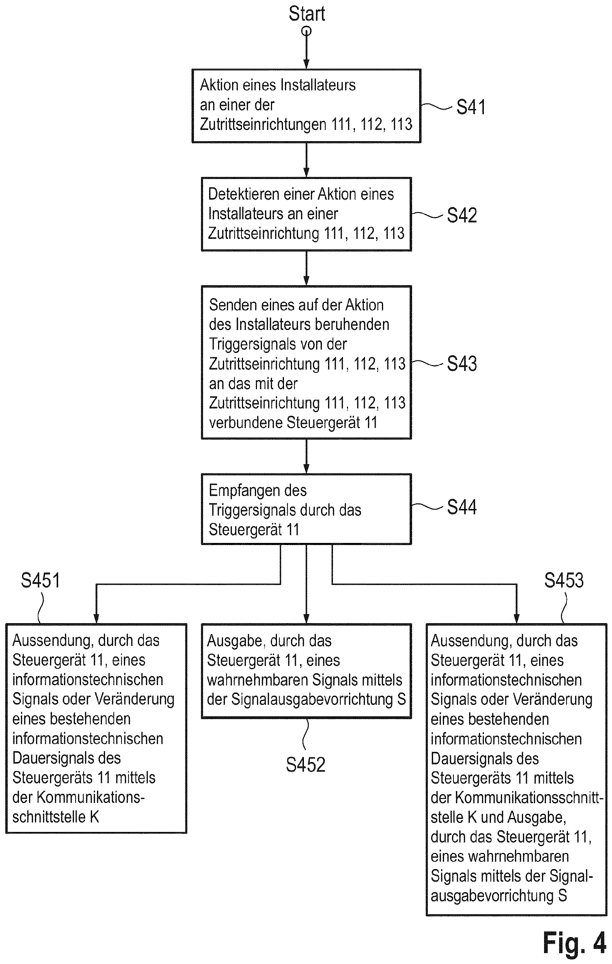

In Fig.4 ist ein Verfahren zur Inbetriebnahmevorbereitung eines Steuergeräts 11 für Zutrittseinrichtungen 111, 112, 113 gemäß einer Ausführungsform der vorliegenden Erfindung, zumindest in Bezug auf zwei Varianten der dargestellten Ausführungsform, gezeigt. In Schritt S41 führt ein Installateur eine Aktion an einer der Zutrittseinrichtungen 111, 112, 113, insbesondere an einer der Zutrittskomponenten 111a, 112a, 113a einer Zutrittseinrichtung 111, 112, 113, durch. Hierbei sind eine Vielzahl unterschiedlicher Aktionen denkbar, die insbesondere auch von den vorhanden Zutrittskomponenten 111a, 112a, 113a abhängen können. Bei der Aktion kann es sich beispielsweise um das Öffnen und/oder Schließen einer Tür, die Betätigung eines Türschlosses, die Betätigung eines Türöffners, die Eingabe eines Passworts oder Codes in eine Zutrittskontrolleinrichtung usw. handeln. Die Aktion des Installateurs an der Zutrittseinrichtung 111, 112, 113 wird detektiert (S42). In Schritt S43 wird ein auf der detektierten Aktion des Installateurs beruhendes Triggersignal von der Zutrittseinrichtung 111, 112, 113 an das mit der Zutrittseinrichtung 111, 112, 113 verbundene Steuergerät 11 gesendet. Das in Schritt S43 gesendete Triggersignal wird in Schritt S44 durch das Steuergerät 11 empfangen. Nach dem Empfangen des Triggersignals in Schritt S44 wird einer der Schritte S451, S452 und S453 durchgeführt, wobei sich die Schritte S452 und S453 auf die erfindungsgemäßen Varianten der gezeigten Ausführungsform beziehen.

In Schritt S451 wird, durch das Steuergerät 11, ein informationstechnisches Signal mittels der Kommunikationsschnittstelle K ausgesendet oder eine Veränderung eines bestehenden informationstechnischen Dauersignals des Steuergeräts 11 mittels der Kommunikationsschnittstelle K durchgeführt. Die Aussendung des informationstechnischen Signals oder die Veränderung des bestehenden informationstechnischen Dauersignals ist durch das mobile Endgerät 20 detektierbar. Hierdurch ist eine Identifikation desjenigen Steuergeräts 11 möglich, das Schritt S451 durchführt. Das in Schritt S451 ausgesendete Signal oder das in Schritt S451 veränderte Dauersignal betrifft beispielsweise ein Advertising durch das Steuergerät 11 oder ein Bluetooth-Pairing. Aus dem in Schritt S451 ausgesendeten Signal oder dem in Schritt S451 veränderten Dauersignal ist insbesondere eine Identifikationsinformation des Steuergeräts 11 ableitbar, durch die das Steuergerät 11 seitens des mobilen Endgeräts identifizierbar ist.

In Schritt S452 wird, durch das Steuergerät 11, ein wahrnehmbares Signal mittels der Signalausgabevorrichtung S ausgeben. Das wahrnehmbare Signal ist insbesondere durch den Installateur wahrnehmbar. Es handelt sich bei dem wahrnehmbaren Signal insbesondere um ein optisches oder akustisches Signal, beispielsweise ein Blinken eines Leuchtmittels oder einen Signalton. Dadurch, dass der Installateur wahrnehmen kann, welches Steuergerät 11 Schritt S452 durchführt, kann der Installateur das Steuergerät 11 identifizieren. Es ist möglich, dass der Installateur eine Eingabe in das mobile Endgerät 20 tätigt, die eine Identifikationsinformation des identifizierten Steuergeräts umfasst und/oder betrifft.

Schritt S453 betrifft eine Kombination aus den Schritten S451 und S452. In Schritt S453 erfolgt dementsprechend eine Aussendung, durch das Steuergerät 11, eines informationstechnischen Signals oder eine Veränderung eines bestehenden informationstechnischen Dauersignals des Steuergeräts 11 mittels der Kommunikationsschnittstelle K und eine Ausgabe, durch das Steuergerät 11, eines wahrnehmbaren Signals mittels der Signalausgabevorrichtung S.

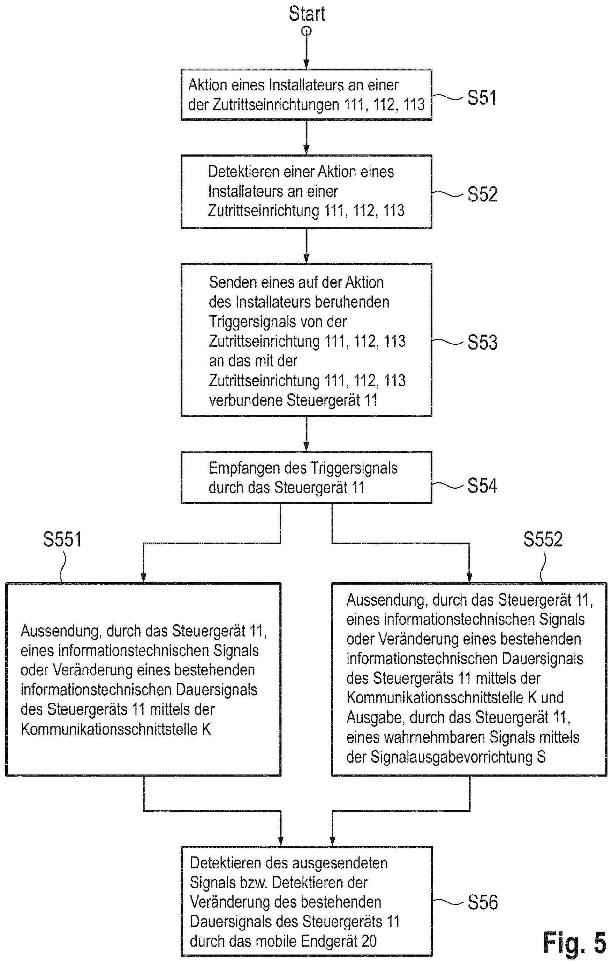

In Fig.5 ist ein Verfahren zur Inbetriebnahmevorbereitung eines Steuergeräts 11 für Zutrittseinrichtungen 111, 112, 113 gemäß einer Ausführungsform der vorliegenden Erfindung, zumindest in Bezug auf eine Variante der dargestellten Ausführungsform, gezeigt. In Schritt S51 führt ein Installateur eine Aktion an einer der Zutrittseinrichtungen 111, 112, 113, insbesondere an einer der Zutrittskomponenten 111a, 112a, 113a einer Zutrittseinrichtung 111, 112, 113, durch. Die Aktion des Installateurs an der Zutrittseinrichtung 111, 112, 113 wird in Schritt S52 detektiert. In Schritt S53 wird ein auf der detektierten Aktion des Installateurs beruhendes Triggersignal von der Zutrittseinrichtung 111, 112, 113 an das mit der Zutrittseinrichtung 111, 112, 113 verbundene Steuergerät 11 gesendet. Das in Schritt S53 gesendete Triggersignal wird in Schritt S54 durch das Steuergerät 11 empfangen. Nach dem Empfangen des Triggersignals in Schritt S54 wird Schritt S551 oder Schritt S552 durchgeführt, wobei sich der Schritt S552 auf die erfindungsgemäße Variante der gezeigten Ausführungsform bezieht.

In Schritt S551 wird, durch das Steuergerät 11, ein informationstechnisches Signal mittels der Kommunikationsschnittstelle K ausgesendet oder eine Veränderung eines bestehenden informationstechnischen Dauersignals des Steuergeräts 11 mittels der Kommunikationsschnittstelle K durchgeführt.

In Schritt S552 erfolgt eine Aussendung, durch das Steuergerät 11, eines informationstechnischen Signals oder eine Veränderung eines bestehenden informationstechnischen Dauersignals des Steuergeräts 11 mittels der Kommunikationsschnittstelle K und eine Ausgabe, durch das Steuergerät 11, eines wahrnehmbaren Signals mittels der Signalausgabevorrichtung S. Das in Schritt S551 oder S552 ausgesendete Signal oder das in Schritt S551 oder S552 veränderte Dauersignal betrifft beispielsweise ein Advertising durch das Steuergerät 11 oder ein Bluetooth-Pairing.

In Schritt S56 wird das durch das Steuergerät 11 ausgesendete Signal bzw. die Veränderung des bestehenden Dauersignals des Steuergeräts 11 durch das mobile Endgerät 20 detektiert. Hierdurch ist eine Identifikation desjenigen Steuergeräts 11 möglich, das Schritt S551 oder S552 durchführt. Aus dem in Schritt S56 detektierten Signal oder der in Schritt S56 detektierten Veränderung des Dauersignals ist insbesondere eine Identifikationsinformation des Steuergeräts 11 ableitbar, durch die das Steuergerät 11 identifizierbar ist.

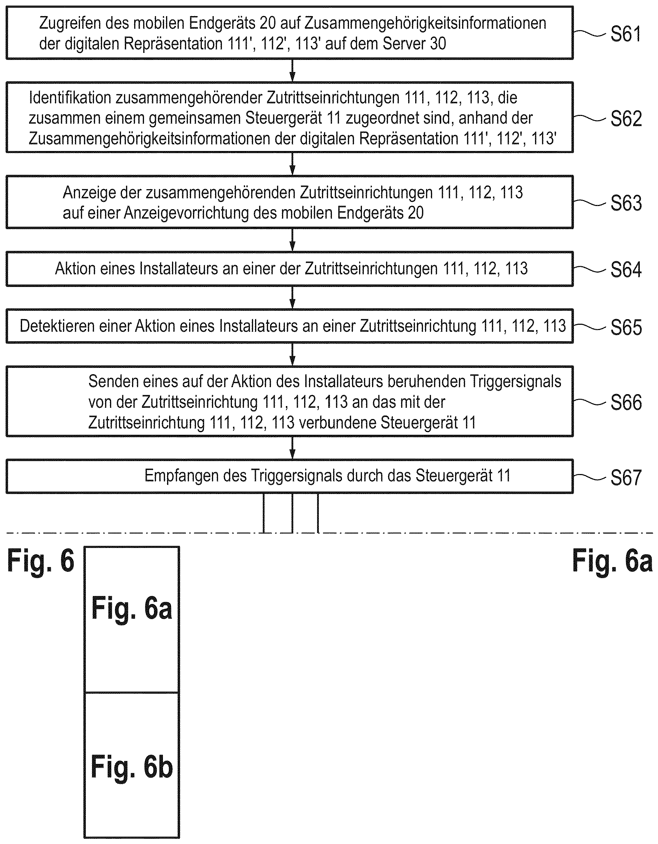

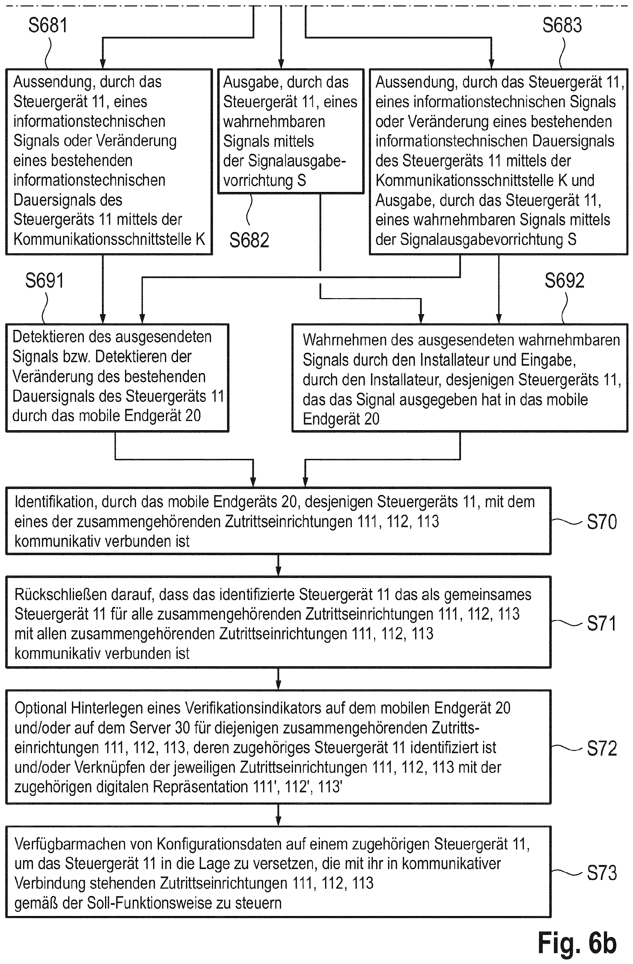

In Fig. 6 ist ein Verfahren zur Inbetriebnahmevorbereitung eines Steuergeräts 11 für Zutrittseinrichtungen 111, 112, 113 gemäß einer Ausführungsform der vorliegenden Erfindung, zumindest in Bezug auf zwei Varianten der dargestellten Ausführungsform, gezeigt. Die Fig. 6 besteht dabei aus den Teilfiguren 6a und 6b, wobei die Fig. 6b die Fig. 6a fortsetzt. In Schritt S61 greift das mobile Endgeräts 20 auf Zusammengehörigkeitsinformationen der digitalen Repräsentation 111', 112', 113' auf dem Server 130 zu. In Schritt S62 erfolgt eine Identifikation zusammengehörender Zutrittseinrichtungen 111, 112, 113, die zusammen einem gemeinsamen Steuergerät 11 zugeordnet sind, anhand der Zusammengehörigkeitsinformationen der digitalen Repräsentation 111', 112', 113'. Die Zusammengehörigkeit der Zutrittseinrichtungen 111, 112, 113 zu einem Steuergerät 11 wird beispielsweise bereits in der Planungsphase der Zutrittseinrichtungen 111, 112, 113, beispielsweise während der TGA, mithilfe der Zusammengehörigkeitsinformationen hinterlegt. In Schritt S63 werden die zusammengehörenden Zutrittseinrichtungen 111, 112, 113 auf einer Anzeigevorrichtung des mobilen Endgeräts 20 angezeigt. Insbesondere werden derart die entsprechenden Zutrittseinrichtungen 111, 112, 113 bzw. Informationen, die die Zutrittseinrichtungen 111, 112, 113 identifizieren, für einen Installateur angezeigt. In Schritt S64 führt der Installateur eine Aktion an einer der Zutrittseinrichtungen 111, 112, 113 durch, die in Schritt S63 auf der Anzeige des mobilen Endgeräts 20 angezeigt wurden. Als Aktion in Schritt S64 kommen dabei eine Vielzahl verschiedener Aktionen infrage, die insbesondere auch von der Ausgestaltung der Zutrittseinrichtung 111, 112, 113 oder deren Zutrittskomponenten abhängen können. In Schritt S65 wird die Aktion des Installateurs an einer Zutrittseinrichtung 111, 112, 113 detektiert. In Schritt S66 wird ein auf der Aktion des Installateurs beruhendes Triggersignal von der Zutrittseinrichtung 111, 112, 113 an das mit der Zutrittseinrichtung 111, 112, 113 verbundene Steuergerät 11 gesendet. Das Senden des Triggersignals in Schritt S66 erfolgt über die Kommunikationsverbindung, beispielsweise ein Bus-System, zwischen der Zutrittseinrichtung 111, 112, 113 und dem Steuergerät 11, an das die Zutrittseinrichtung 111, 112, 113 angebunden ist. In Schritt S67 wird das Triggersignal durch das Steuergerät 11 empfangen. Nach Schritt S67 erfolgt einer der Schritte S681, S682 oder S683, wobei sich die Schritte S682 sowie S683 auf die erfindungsgemäßen Varianten der gezeigten Ausführungsform beziehen.

In Schritt S681 erfolgt eine Aussendung, durch das Steuergerät 11, eines informationstechnischen Signals oder eine Veränderung eines bestehenden informationstechnischen Dauersignals des Steuergeräts 11 mittels der Kommunikationsschnittstelle K.

In Schritt S682 erfolgt eine Ausgabe, durch das Steuergerät 11, eines wahrnehmbaren Signals mittels der Signalausgabevorrichtung S.

In Schritt S683 erfolgt eine Kombination der Schritte S681 und S682. Insbesondere erfolgt eine Aussendung, durch das Steuergerät 11, eines informationstechnischen Signals oder eine Veränderung eines bestehenden informationstechnischen Dauersignals des Steuergeräts 11 mittels der Kommunikationsschnittstelle K und eine Ausgabe, durch das Steuergerät 11, eines wahrnehmbaren Signals mittels der Signalausgabevorrichtung S.

Auf die Schritte S681 und S683 folgt Schritt S691. In Schritt S691 erfolgt ein Detektieren des ausgesendeten Signals bzw. Detektieren der Veränderung des bestehenden Dauersignals des Steuergeräts 11 durch das mobile Endgerät 20. Aus dem detektierten Signal bzw. der detektierten Veränderung des bestehenden Dauersignals kann insbesondere auf eine Identifikationsinformation des Steuergeräts 11 geschlossen werden, sodass das Steuergerät 11 anhand des detektierten Signals bzw. der detektierten Veränderung des bestehenden Dauersignals identifizierbar ist.

Auf die Schritte S682 und S683 folgt Schritt S692. In Schritt S692 erfolgt ein Wahrnehmen des ausgesendeten wahrnehmbaren Signals durch den Installateur und eine Eingabe, durch den Installateur, desjenigen Steuergeräts 11, das das Signal ausgegeben hat, in das mobile Endgerät 20. Es ist möglich, dass der Installateur dabei eine Eingabe in das mobile Endgerät 20 tätigt, die eine Identifikationsinformation des identifizierten Steuergeräts 11 umfasst und/oder betrifft.

Auf die Schritte S691 und/oder S692 folgt Schritt S70. In Schritt S70 erfolgt eine Identifikation, durch das mobile Endgerät 20, desjenigen Steuergeräts 11, mit dem eine der zusammengehörenden Zutrittseinrichtungen 111, 112, 113 kommunikativ verbunden ist. Hierbei wird insbesondere das Steuergerät 11 identifiziert, das die Schritte S681, S682 oder S683 durchgeführt hat. Ferner ist bekannt, an welcher Zutrittseinrichtung 111, 112, 113 die Aktion des Installateurs in Schritt S64 durchgeführt wurde. Somit ist dasjenige Steuergerät 11 identifiziert, das mit der Zutrittseinrichtung 111, 112, 113 verbunden ist, an der die Aktion des Installateurs in Schritt S64 durchgeführt wurde.

In Schritt S71 wird darauf rückgeschlossen, dass das identifizierte Steuergerät 11 als gemeinsames Steuergerät 11 für alle zusammengehörenden Zutrittseinrichtungen 111, 112, 113 mit allen zusammengehörenden Zutrittseinrichtungen 111, 112, 113 kommunikativ verbunden ist. Dies erfolgt insbesondere anhand der Zusammengehörigkeitsinformationen, aus denen ableitbar ist, welche Zutrittseinrichtungen 111, 112, 113 dem identifizierten Steuergerät 11 zugeordnet sind oder sein sollten.

In einem optionalen Schritt S72 erfolgt optional ein Hinterlegen eines Verifikationsindikators auf dem mobilen Endgerät 20 und/oder auf dem Server 130 für diejenigen zusammengehörenden Zutrittseinrichtungen 111, 112, 113, deren zugehöriges Steuergerät 11 identifiziert ist und/oder optional ein Verknüpfen der jeweiligen Zutrittseinrichtungen 111, 112, 113 mit der zugehörigen digitalen Repräsentation 111', 112', 113'.

In Schritt S73 erfolgt ein Verfügbarmachen von Konfigurationsdaten auf dem zugehörigen Steuergerät 11, um das Steuergerät 11 in die Lage zu versetzen, die mit ihm in kommunikativer Verbindung stehenden Zutrittseinrichtungen 111, 112, 113 gemäß der Soll-Funktionsweise zu steuern. Somit kann eine vorteilhafte Inbetriebnahme des Steuergeräts 11 und der Zutrittseinrichtungen 111, 112, 113 erfolgen.

Alternativ zu Schritt S73 ist es denkbar, dass ein Verfügbarmachen der Konfigurationsdaten auf einem zugehörigen Steuergerät 11 und ein Weiterleiten jeweils von Teilen der Konfigurationsdaten an die mit diesem Steuergerät 11 in kommunikativer Verbindung stehenden Zutrittseinrichtungen 111, 112, 113 erfolgt, um die Zutrittseinrichtungen 111, 112, 113 gemäß ihrer Soll-Funktionsweise zu konfigurieren. Die Konfigurationsdaten können in diesem Fall im Folgenden von dem Steuergerät 11 gelöscht werden oder auf dem Steuergerät gespeichert bleiben. Dies bietet eine besonders vorteilhafte Sicherheit, da durch eine spätere Manipulation des Steuergeräts 11 die Funktionen der Zutrittseinrichtungen 111, 112, 113, beispielsweise Sicherheitsfunktionen, nicht manipuliert werden können.

Ferner ist es alternativ zu Schritt S73 denkbar, dass ein Verfügbarmachen der Konfigurationsdaten auf einem zugehörigen Steuergerät 11 und ein Weiterleiten jeweils von Teilen der Konfigurationsdaten an die Zutrittskomponenten der mit diesem Steuergerät 11 in kommunikativer Verbindung stehenden Zutrittseinrichtungen 111, 112, 113 erfolgt, um die Zutrittskomponenten gemäß ihrer Soll-Funktionsweise zu konfigurieren. Die Konfigurationsdaten können in diesem Fall im Folgenden von dem Steuergerät 11 gelöscht werden oder auf dem Steuergerät 11 gespeichert bleiben. Dies bietet eine besonders vorteilhafte Sicherheit, da durch eine spätere Manipulation des Steuergeräts 11 die Funktionen der Zutrittskomponenten, beispielsweise Sicherheitsfunktionen, nicht manipuliert werden können.

Die in den Figuren aufgeführten Schritte geben nicht unbedingt eine sequentielle oder chronologische Reihenfolge an. Die Reihenfolge der Schritte kann in vielen Fällen gemäß alternativer Ausführungsformen der vorliegenden Erfindung gegenüber der in den Figuren dargestellten Reihenfolge verändert werden.

### Bezugszeichenliste

- 11: Steuergerät
- 12: weiteres Steuergerät
- 20: mobiles Endgerät
- 111, 112, 113: Zutrittseinrichtungen
- 111`, 112', 113`: digitale Repräsentationen
- 111a, 112a, 113a: Zutrittskomponenten
- 111b, 112b, 113b: Zutrittskomponenten
- 121, 122, 123: weitere Zutrittseinrichtungen
- 121`, 122`, 123`: weitere digitale Repräsentationen
- 130: Server
- K: Kommunikationsschnittstelle
- S: Signalausgabevorrichtung
- S41 - S453: Schritte
- S51 - S56: Schritte
- S61 - S73: Schritte

## Patentansprüche

1. Verfahren zur Inbetriebnahmevorbereitung eines Steuergeräts (11) für Zutrittseinrichtungen (111, 112, 113), wobei mindestens eine Zutrittseinrichtung (111, 112, 113) mit dem Steuergerät (11) kommunikativ verbunden ist,
**dadurch gekennzeichnet, dass** das Steuergerät (11) eine Signalausgabevorrichtung (S) zur Ausgabe eines wahrnehmbaren Signals aufweist,
und das Verfahren die folgenden Schritte umfasst:
a) Detektieren einer Aktion eines Installateurs an einer Zutrittseinrichtung (111, 112, 113),
b) Senden eines auf der Aktion des Installateurs beruhenden Triggersignals von der Zutrittseinrichtung (111, 112, 113) an das mit der Zutrittseinrichtung (111, 112, 113) verbundene Steuergerät (11),
c) Empfangen des Triggersignals durch das Steuergerät (11),
d) Ausgabe, durch das Steuergerät (11), eines wahrnehmbaren Signals mittels der Signalausgabevorrichtung (S) als Reaktion auf das in Schritt c) durch das Steuergerät empfangene Triggersignal.

2. Verfahren nach Anspruch 1, wobei das Steuergerät (11) eine Kommunikationsschnittstelle (K) zur informationstechnischen Kommunikation mit einem mobilen Endgerät (20) aufweist, wobei in Schritt d) weiterhin eine Aussendung, durch das Steuergerät (11), eines informationstechnischen Signals oder eine Veränderung eines bestehenden informationstechnischen Dauersignals des Steuergeräts (11) mittels der Kommunikationsschnittstelle (K), erfolgt.

3. Verfahren nach Anspruch 1 oder 2, wobei jede Zutrittseinrichtung (111, 112, 113) mindestens eine Zutrittskomponente (111a, 111b, 112a, 112b, 113a, 113b) umfasst, wobei in Schritt a) die Aktion eines Installateurs an einer Zutrittskomponente (111a, 111b, 112a, 112b, 113a, 113b) einer Zutrittseinrichtung (111, 112, 113) erfolgt und detektiert wird.

4. Verfahren nach Anspruch 2 und optional nach Anspruch 3, wobei das über die Kommunikationsschnittstelle (K) des Steuergeräts (10) ausgesendete Signal oder Dauersignal ein Nahbereichskommunikationssignal, vorzugsweise ein Bluetooth-Signal bzw. Bluetooth-Dauersignal, ein Bluetooth-Low-Energy-Signal, ein ZigBee-Signal oder ein Wi-Fi-Signal, ist.

5. Verfahren nach Anspruch 2 und optional nach einem der Ansprüche 3 bis 4, wobei das Verfahren umfasst:
e) Detektieren des ausgesendeten Signals bzw. Detektieren der Veränderung des bestehenden Dauersignals des Steuergeräts (11) durch das mobile Endgerät (20).

6. Verfahren nach Anspruch 4 oder 5, wobei das mobile Endgerät (20) über eine direkte oder indirekte Netzwerkverbindung mit einem Server (130) kommuniziert, wobei der Server (130) über eine digitale Repräsentation (111', 112', 113`) der Zutrittseinrichtungen (111, 112, 113) verfügt,
wobei die digitale Repräsentation (111', 112', 113') Zusammengehörigkeitsinformationen umfasst, aus denen ableitbar ist, welche der Zutrittseinrichtungen (111, 112, 113) zusammen einem gemeinsamen Steuergerät (11) zugeordnet und mit diesem kommunikativ verbunden sind oder verbunden sein sollten,
wobei das mobile Endgerät (20) vorzugsweise auf die Zusammengehörigkeitsinformationen der digitalen Repräsentation (111', 112', 113') zugreift.

7. Verfahren nach den Ansprüchen 5 und 6, wobei das Verfahren umfasst:
- Identifikation zusammengehörender Zutrittseinrichtungen (111, 112, 113), die zusammen einem gemeinsamen Steuergerät (11) zugeordnet sind, anhand der Zusammengehörigkeitsinformationen der digitalen Repräsentation (111', 112', 113'),
- Anzeige der zusammengehörenden Zutrittseinrichtungen (111, 112, 113) auf einer Anzeigevorrichtung des mobilen Endgeräts (20),
- Identifikation, mittels des mobilen Endgeräts (20), desjenigen Steuergeräts (11), mit dem eine der zusammengehörenden Zutrittseinrichtungen (111, 112, 113) kommunikativ verbunden ist mittels der Verfahrensschritte a) bis e),
- und Rückschließen darauf, dass das identifizierte Steuergerät (11) als gemeinsames Steuergerät (11) für alle zusammengehörenden Zutrittseinrichtungen (111, 112, 113) mit allen zusammengehörenden Zutrittseinrichtungen (111, 112, 113) kommunikativ verbunden ist,
- vorzugsweise Hinterlegen eines Verifikationsindikators auf dem mobilen Endgerät (20) und/oder auf dem Server (130) für diejenigen zusammengehörenden Zutrittseinrichtungen (111, 112, 113), deren zugehöriges Steuergerät (11) identifiziert ist und/oder Verknüpfen der jeweiligen Zutrittseinrichtungen (111, 112, 113) mit der zugehörigen digitalen Repräsentation (111', 112', 113`).

8. Verfahren nach einem der vorhergehenden Ansprüche, wobei der Installateur eine Eingabe in das mobile Endgerät (20) tätigt, wobei die Eingabe Informationen darüber umfasst,
an welcher Zutrittseinrichtung (111, 112, 113) eine Aktion durchgeführt wird oder wurde, und/oder
welches Steuergerät (11) Schritt d) durchgeführt hat.

9. Verfahren nach einem der vorhergehenden Ansprüche, wobei das mobile Endgerät (20) und/oder ein Server (130) über eine digitale Repräsentation (111', 112', 113`) der Zutrittseinrichtungen (111, 112, 113) verfügt,
wobei die digitale Repräsentation (111', 112', 113') Konfigurationsdaten umfasst, durch die eine Soll-Funktionsweise der Zutrittseinrichtungen (111, 112, 113) definiert ist, wobei das Verfahren ferner umfasst:
- Verfügbarmachen der Konfigurationsdaten auf einem zugehörigen Steuergerät (11), um das Steuergerät (11) in die Lage zu versetzen, die mit ihm in kommunikativer Verbindung stehenden Zutrittseinrichtungen (111, 112, 113) gemäß der Soll-Funktionsweise zu steuern;
und/oder
- Verfügbarmachen der Konfigurationsdaten auf einem zugehörigen Steuergerät (11) und Weiterleiten jeweils von Teilen der Konfigurationsdaten an die mit diesem Steuergerät (11) in kommunikativer Verbindung stehenden Zutrittseinrichtungen (111, 112, 113), um die Zutrittseinrichtungen (111, 112, 113) gemäß ihrer Soll-Funktionsweise zu konfigurieren;
und/oder
- Verfügbarmachen der Konfigurationsdaten auf einem zugehörigen Steuergerät (11) und Weiterleiten jeweils von Teilen der Konfigurationsdaten an die Zutrittskomponenten der mit diesem Steuergerät (11) in kommunikativer Verbindung stehenden Zutrittseinrichtungen (111, 112, 113), um die Zutrittskomponenten gemäß ihrer Soll-Funktionsweise zu konfigurieren.

10. Verfahren nach Anspruch 9, wobei die digitale Repräsentation (111', 112', 113') der Zutrittseinrichtungen (111, 112, 113) auf dem Server (130) verfügbar ist, wobei das mobile Endgerät (20) über eine direkte oder indirekte Netzwerkverbindung mit dem Server (130) kommuniziert und über die Kommunikationsschnittstelle (K) mit dem Steuergerät (11) kommuniziert, wobei das mobile Endgerät (20) die Konfigurationsdaten vom Server (130) abruft und an das Steuergerät (11) sendet.

11. Verfahren nach Anspruch 9, wobei die digitale Repräsentation (111', 112', 113') der Zutrittseinrichtungen (111, 112, 113) auf dem Server (130) verfügbar ist, wobei das Steuergerät (11) über eine direkte oder indirekte Netzwerkverbindung mit dem Server (130) kommuniziert und die Konfigurationsdaten vom Server (130) abruft.

12. Verfahren nach Anspruch 11, wobei das mobile Endgerät (20) über die Kommunikationsschnittstelle (K) mit dem Steuergerät (11) kommuniziert und den Abruf der Konfigurationsdaten auslöst.

13. Verfahren nach Anspruch 9, wobei das mobile Endgerät (20) die Konfigurationsdaten vorab vom Server (130) abruft, speichert und zu einem späteren Zeitpunkt die Konfigurationsdaten über die Kommunikationsschnittstelle (K) an ein zugehöriges Steuergerät (11) sendet.

14. Verfahren nach Anspruch 3 und optional nach einem der Ansprüche 4 bis 13, wobei die Zutrittskomponente (111a, 111b, 112a, 112b, 113a, 113b) der Zutrittseinrichtung (111, 112, 113) bei der Aktion des Installateurs an der Zutrittskomponente (111a, 111b, 112a, 112b, 113a, 113b) Schritt b) durchführt und mittels des in Schritt c) empfangenen Triggersignals eine Zuordnung der Zutrittskomponente (111a, 111b, 112a, 112b, 113a, 113b) zu der zugehörigen Zutrittseinrichtung (111, 112, 113) erfolgt.

15. Zutrittssystem mit mindestens einer Zutrittseinrichtung (111, 112, 113) und mindestens einem Steuergerät (11), wobei die mindestens eine Zutrittseinrichtung (111, 112, 113) vorzugsweise mindestens eine Zutrittskomponente (111a, 111b, 112a, 112b, 113a, 113b) umfasst, wobei das Zutrittssystem eingerichtet und ausgebildet ist, um ein Verfahren nach einem der Ansprüche 1 bis 14 durchzuführen.

16. Computerprogrammprodukt, umfassend Befehle, die bewirken, dass beim Betrieb in einem Zutrittssystem nach Anspruch 15 ein Verfahren nach einem der Ansprüche 1 bis 14 durchführt.

## Claims

1. A method for preparing for the start-up of a control unit (11) for access devices (111, 112, 113), wherein at least one access device (111, 112, 113) is communicatively connected to the control unit (11),
**characterized in that** the control unit (11) has a signal output apparatus (S) for outputting a discernible signal,
and the method comprises the following steps:
a) detecting an installer's action at an access device (111, 112, 113), transmitting a trigger signal relating to the installer's action from the access device (111, 112, 113) to the control unit (11) connected to the access device (111, 112, 113),
c) receiving the trigger signal by means of the control unit (11),
d) outputting, by means of the control unit (11), a discernible signal by means of the signal output apparatus (S) in response to the trigger signal received by the control unit in step c).

2. The method according to claim 1, wherein the control unit (11) has a communication interface (K) for information technology communication with a mobile terminal (20), wherein in step d) there is also a transmission by the control unit (11) of an information technology signal or a change to an existing continuous information technology signal of the control unit (11) by means of the communication interface (K).

3. The method according to claim 1 or 2, wherein each access device (111, 112, 113) comprises at least one access component (111a, 111b, 112a, 112b, 113a, 113b), wherein in step a) the installer's action takes place at an access component (111a, 111b, 112a, 112b, 113a, 113b) of an access device (111, 112, 113) and is detected.

4. The method according to claim 2 and optionally according to claim 3, in which the signal or continuous signal transmitted via the communication interface (K) of the control unit (10) is a short-range communication signal, preferably a Bluetooth signal or continuous Bluetooth signal, a Bluetooth low-energy signal, a ZigBee signal or a Wi-Fi signal.

5. The method according to claim 2 and optionally according to any one of claims 3 to 4, wherein the method comprises:
e) detecting the transmitted signal or detecting the change to the existing continuous signal of the control unit (11) by means of the mobile terminal (20).

6. The method according to claim 4 or 5, wherein the mobile terminal (20) communicates with a server (130) via a direct or indirect network connection, wherein the server (130) has a digital representation (111', 112', 113') of the access devices (111, 112, 113),
wherein the digital representation (111', 112', 113') comprises affiliation information from which it can be derived which of the access devices (111, 112, 113) are assigned together to a common control unit (11) and are or should be communicatively connected thereto,
wherein the mobile terminal (20) preferably accesses the affiliation information of the digital representation (111', 112', 113').

7. The method according to claims 5 and 6, wherein the method comprises:
- identifying affiliated access devices (111, 112, 113), which are assigned together to a common control unit (11), based on the affiliation information of the digital representation (111', 112', 113'),
- displaying the affiliated access devices (111, 112, 113) on a display device of the mobile terminal (20),
- identifying, by the mobile terminal (20), the control unit (11) with which one of the affiliated access devices (111, 112, 113) is communicatively connected by means of method steps a) to e),
- and concluding that the identified control unit (11) is communicatively connected as a common control unit (11) for all affiliated access devices (111, 112, 113) to all affiliated access devices (111, 112, 113),
- preferably storing a verification indicator on the mobile terminal (20) and/or on the server (130) for the affiliated access devices (111, 112, 113) whose associated control unit (11) is identified and/or linking the respective access devices (111, 112, 113) with the associated digital representation (111', 112', 113').

8. The method according to any one of the preceding claims, wherein the installer makes an input into the mobile terminal (20), wherein the input comprises information about
at which access device (111, 112, 113) an action is or has been carried out, and/or
which control unit (11) carried out step d).

9. The method according to any one of the preceding claims, wherein the mobile terminal (20) and/or a server (130) has a digital representation (111', 112', 113') of the access devices (111, 112, 113),
wherein the digital representation (111', 112', 113') comprises configuration data that defines a target mode of operation of the access devices (111, 112, 113), wherein the method further comprises:
- making the configuration data available on an associated control unit (11) in order to enable the control unit (11) to control the access devices (111, 112, 113) that are in communicative connection therewith according to the target mode of operation;
and/or
- making the configuration data available on an associated control unit (11) and forwarding parts of the configuration data to the access devices (111, 112, 113) in communicative connection with this control unit (11) in order to configure the access devices (111, 112, 113) according to their target mode of operation;
and/or
- making the configuration data available on an associated control unit (11) and forwarding parts of the configuration data to the access components of the access devices (111, 112, 113) that are in communicative connection with this control unit (11) in order to configure the access components according to their target mode of operation.

10. The method according to claim 9, wherein the digital representation (111', 112', 113') of the access devices (111, 112, 113) is available on the server (130), wherein the mobile terminal (20) communicates with the server (130) via a direct or indirect network connection and communicates with the control unit (11) via the communication interface (K), wherein the mobile terminal (20) retrieves the configuration data from the server (130) and sends it to the control unit (11).

11. The method according to claim 9, wherein the digital representation (111', 112', 113') of the access devices (111, 112, 113) is available on the server (130), wherein the control unit (11) communicates with the server (130) via a direct or indirect network connection and retrieves the configuration data from the server (130).

12. The method according to claim 11, wherein the mobile terminal (20) communicates with the control unit (11) via the communication interface (K) and triggers the retrieval of the configuration data.

13. The method according to claim 9, wherein the mobile terminal (20) calls up the configuration data in advance from the server (130), stores it and sends the configuration data to an associated control unit (11) via the communication interface (K) at a later point in time.

14. The method according to claim 3 and optionally according to any one of claims 4 to 13, wherein the access component (111a, 111b, 112a, 112b, 113a, 113b) of the access device (111, 112, 113) performs step b) upon the installer's action on the access component (111a, 111b, 112a, 112b, 113a, 113b) and an assignment of the access component (111a, 111b, 112a, 112b, 113a, 113b) to the affiliated access device (111, 112, 113) is performed by means of the trigger signal received in step c).

15. An access system with at least one access device (111, 112, 113) and at least one control unit (11), wherein the at least one access device (111, 112, 113) preferably comprises at least one access component (111a, 111b, 112a, 112b, 113a, 113b), wherein the access system is configured and designed to perform a method according to any one of claims 1 to 14.

16. A computer program product comprising instructions which, when operated in an access system according to claim 15, cause a method according to any one of claims 1 to 14 to be carried out.

## Revendications

1. Procédé de préparation de mise en service d'un appareil de commande (11) pour des dispositifs d'accès (111, 112, 113), dans lequel au moins un dispositif d'accès (111, 112, 113) est relié en communication à l'appareil de commande (11),
**caractérisé en ce que** l'appareil de commande (11) présente un dispositif de délivrance de signal (S) pour délivrer un signal perceptible,
et le procédé comprend les étapes suivantes :
a) détection d'une action d'un installateur sur un dispositif d'accès (111, 112, 113),
b) envoi d'un signal de déclenchement basé sur l'action de l'installateur depuis le dispositif d'accès (111, 112, 113) vers l'appareil de commande (11) relié au dispositif d'accès (111, 112, 113),
c) réception du signal de déclenchement par l'appareil de commande (11),
d) délivrance, par l'appareil de commande (11), d'un signal perceptible au moyen du dispositif de délivrance de signal (S) en réaction au signal de déclenchement reçu par l'appareil de commande à l'étape c).

2. Procédé selon la revendication 1, dans lequel l'appareil de commande (11) présente une interface de communication (K) pour la communication informatique avec un terminal mobile (20), dans lequel à l'étape d) il y a également une transmission, par l'appareil de commande (11) d'un signal informatique ou un changement d'un signal informatique continu existant de l'appareil de commande (11) au moyen de l'interface de communication (K).

3. Procédé selon la revendication 1 ou 2, dans lequel chaque dispositif d'accès (111, 112, 113) comprend au moins un composant d'accès (111a, 111b, 112a, 112b, 113a, 113b), dans lequel à l'étape a) l'action d'un installateur est effectuée sur un composant d'accès (111a, 111b, 112a, 112b, 113a, 113b) d'un dispositif d'accès (111, 112, 113) et détectée.

4. Procédé selon la revendication 2 et éventuellement selon la revendication 3, dans lequel le signal ou le signal continu transmis par l'intermédiaire de l'interface de communication (K) de l'appareil de commande (10) est un signal de communication à courte portée, de préférence un signal Bluetooth ou un signal continu Bluetooth, un signal Bluetooth basse consommation, un signal ZigBee ou un signal Wi-Fi.

5. Procédé selon la revendication 2 et éventuellement selon l'une des revendications 3 à 4, le procédé comprenant :
e) la détection du signal émis ou la détection du changement du signal continu existant de l'appareil de commande (11) par le terminal mobile (20).

6. Procédé selon la revendication 4 ou 5, dans lequel le terminal mobile (20) communique avec un serveur (130) par l'intermédiaire d'une liaison réseau directe ou indirecte, dans lequel le serveur (130) dispose d'une représentation numérique (111', 112', 113') des dispositifs d'accès (111, 112, 113),
dans lequel la représentation numérique (111', 112', 113') comprend des informations d'association à partir desquelles il peut être déduit lesquels des dispositifs d'accès (111, 112, 113) sont affectés ensemble à un appareil de commande (11) commun et sont ou devraient être reliés par communication avec celui-ci,
dans lequel le terminal mobile (20) accède de préférence aux informations d'association de la représentation numérique (111', 112', 113').

7. Procédé selon les revendications 5 et 6, dans lequel le procédé comprend :
- l'identification de dispositifs d'accès (111, 112, 113) associés, qui sont affectés ensemble à un appareil de commande (11) commun, en fonction des informations d'association de la représentation numérique (111', 112', 113'),
- l'affichage des dispositifs d'accès (111, 112, 113) associés sur un dispositif d'affichage du terminal mobile (20),
- l'identification, au moyen du terminal mobile (20), de cet appareil de commande (11) avec lequel l'un des dispositifs d'accès (111, 112, 113) associés est relié en communication au moyen des étapes de procédé a) à e),
- et la conclusion que l'appareil de commande (11) identifié est relié en communication à tous les dispositifs d'accès (111, 112, 113) associés en tant qu'appareil de commande (11) commun pour tous les dispositifs d'accès (111, 112, 113) associés,
- le stockage de préférence d'un indicateur de vérification sur le terminal mobile (20) et/ou sur le serveur (130) pour les dispositifs d'accès (111, 112, 113) associés, dont l'appareil de commande (11) associé est identifié et/ou la liaison les dispositifs d'accès (111, 112, 113) respectifs à la représentation numérique (111', 112', 113') associée.

8. Procédé selon l'une des revendications précédentes, dans lequel l'installateur effectue une saisie dans le terminal mobile (20), dans lequel la saisie comprend des informations concernant,
le dispositif d'accès (111, 112, 113) sur lequel une action est ou a été effectuée, et/ou
l'appareil de commande (11) qui a exécuté l'étape d).

9. Procédé selon l'une des revendications précédentes, dans lequel le terminal mobile (20) et/ou un serveur (130) dispose d'une représentation numérique (111', 112', 113') des dispositifs d'accès (111, 112, 113),
dans lequel la représentation numérique (111, 112', 113') comprend des données de configuration, qui définissent un mode de fonctionnement théorique des dispositifs d'accès (111, 112, 113), dans lequel le procédé comprend en outre :
- la mise à disposition des données de configuration sur un appareil de commande (11) associé afin de permettre à l'appareil de commande (11) de commander les dispositifs d'accès (111, 112, 113) qui sont en liaison de communication avec lui selon le mode de fonctionnement théorique ;
et/ou
- la mise à disposition des données de configuration sur un appareil de commande (11) associé et la transmission respectivement de parties des données de configuration aux dispositifs d'accès (111, 112, 113) qui sont en liaison de communication avec cet appareil de commande (11), afin de configurer les dispositifs d'accès (111, 112, 113) conformément à leur mode de fonctionnement théorique ;
et/ou
- la mise à disposition des données de configuration sur un appareil de commande (11) associé et la transmission de parties des données de configuration aux composants d'accès des dispositifs d'accès (111, 112, 113) qui sont en liaison de communication avec cet appareil de commande (11), afin de configurer les composants d'accès en fonction de leur mode de fonctionnement théorique.

10. Procédé selon la revendication 9, dans lequel la représentation numérique (111', 112', 113') des dispositifs d'accès (111, 112, 113) est disponible sur le serveur (130), dans lequel le terminal mobile (20) communique par l'intermédiaire d'une liaison réseau directe ou indirecte avec le serveur (130) et communique avec l'appareil de commande (11) par l'intermédiaire de l'interface de communication (K), dans lequel le terminal mobile (20) récupère les données de configuration du serveur (130) et les transmettant à l'appareil de commande (11).

11. Procédé selon la revendication 9, dans lequel la représentation numérique (111', 112', 113') des dispositifs d'accès (111, 112, 113) est disponible sur le serveur (130), dans lequel l'appareil de commande (11) communique par l'intermédiaire d'une liaison réseau directe ou indirecte avec le serveur (130) et récupère les données de configuration du serveur (130).

12. Procédé selon la revendication 11, dans lequel le terminal mobile (20) communique avec l'appareil de commande (11) par l'intermédiaire de l'interface de communication (K) et déclenche la récupération des données de configuration.

13. Procédé selon la revendication 9, dans lequel le terminal mobile (20) récupère à l'avance les données de configuration du serveur (130), les stocke et envoie les données de configuration à un appareil de commande (11) associé par l'intermédiaire de l'interface de communication (K) à un moment ultérieur.

14. Procédé selon la revendication 3 et éventuellement selon l'une des revendications 4 à 13, dans lequel les composants d'accès (111a, 111b, 112a, 112b, 113a, 113b) du dispositif d'accès (111, 112, 113), lors de l'action de l'installateur sur les composants d'accès (111a, 111b, 112a, 112b, 113a, 113b), exécute l'étape b) et au moyen du signal de déclenchement reçu à l'étape c) un agencement des composant d'accès (111a, 111b, 112a, 112b, 113a, 113b) est effectué sur le dispositif d'accès (111, 112, 113) associé.

15. Système d'accès comportant au moins un dispositif d'accès (111, 112, 113) et au moins un appareil de commande (11), dans lequel le au moins un dispositif d'accès (111, 112, 113) comprend de préférence au moins un composant d'accès (111a, 111b, 112a, 112b, 113a, 113b), dans lequel le système d'accès est conçu et agencé pour mettre en oeuvre un procédé selon l'une quelconque des revendications 1 à 14.

16. Produit de programme informatique comprenant des instructions qui, lorsqu'elles sont exploitées dans un système d'accès selon la revendication 15, provoquent l'exécution d'un procédé selon l'une quelconque des revendications 1 à 14.
